# FASCICULE DE BREVET EUROPEEN

(11) **EP 0 583 188 B1**
(45) Date de publication et mention de la délivrance du brevet: **12.02.1997**
(21) Numéro de dépôt: 93401935.7
(22) Date de dépôt: 26.07.1993
(51) Int. Cl.: B23K 26/00

(54) **Procédé de soudage bord à bord d'au moins deux tôles**
Verfahren zum Schweissen von mindestens zwei auf Stoss geführten Stahlblechen
Process for butt welding at least two steel sheets

(30) Priorité: 04.08.1992 FR 9209671
(43) Date de publication de la demande: 16.02.1994
(73) Titulaire: SOLLAC, F-92800 Puteaux (FR)
(72) Inventeur: Guth, Jérôme, F-59140 Dunkerque (FR); Philbois, Nathalie, F-59240 Dunkerque (FR)
(74) Mandataire: Lanceplaine, Jean-Claude

(56) Documents cités:
- EP-A- 0 279 866
- EP-A- 0 531 139
- PATENT ABSTRACTS OF JAPAN vol. 011, no. 372 (M-648)4 Décembre 1987 & JP-A-62 144 888 (TOYOTA MOTOR CORP.) 29 Juin 1987

## Description

La présente invention a pour objet un procédé de soudage bord à bord de tôles de différentes épaisseurs au moyen d'un faisceau laser, plus particulièrement de tôles dites minces d'épaisseur inférieure à 3mm.

Le soudage laser a trouvé un débouché industriel important notamment dans la production de flans raboutés, par exemple pour l'industrie automobile.

Le soudage bord à bord de tôles au moyen d'un faisceau laser est réalisé sans métal d'apport et demande de très hautes exigences de précision, de forme et de position des tôles à souder.

A cet effet, les tôles doivent avoir été préalablement coupées au moyen d'une cisaille ou d'un faisceau laser avec une précision telle que le jeu entre lesdites tôles soit minimum pour assurer une bonne qualité du contact entre les tôles au niveau du plan de joint.

Si la qualité du contact au niveau du plan de joint entre les tôles à souder est incorrect, c'est à dire si le jeu entre les tôles à souder est trop important, il peut arriver que le joint soudé ne soit pas continu et présente des trous.

D'autre part, si le jeu entre les tôles au niveau du plan de joint est localement trop important, le joint soudé peut présenter un effondrement.

Un tel effondrement du plan de joint est toléré si il ne dépasse pas certaines limites.

Ainsi, les normes définies par les constructeurs automobiles imposent que pour des tôles dont l'épaisseur est inférieure à 1mm, la valeur totale de l'effondrement du joint à souder, c'est à dire le cumul de la valeur de l'effondrement en partie supérieure et partie inférieure des tôles, ne dépasse pas 20% de l'épaisseur de la tôle de plus faible épaisseur.

De même, pour des tôles d'épaisseur supérieure à 1mm, la valeur totale de l'effondrement du joint soudé ne doit pas dépasser 10% de l'épaisseur de la tôle de plus faible épaisseur.

Pour limiter ces risques de joint non continu ou d'effondrement trop important, jusqu'à présent on améliore la qualité du cisaillage des tôles afin de limiter les ondulations des arêtes de coupe et d'assurer un meilleur contact des tôles entre elles pour mieux maîtriser le jeu entre lesdites tôles.

Mais, pour obtenir un tel résultat, il est nécessaire d'investir dans des cisailles très précises de coût important ou d'utiliser des cisailles doubles permettant de couper simultanément, avec la même lame, les deux tôles à rabouter.

Pour s'affranchir de cette opération de cisaillage de précision coûteuse et délicate, il est connu d'effectuer la soudure avec un fil d'apport consommable se déroulant au point de soudage.

Ce métal supplémentaire en fusion permet de combler les jeux présents entre les tôles.

Il est également connu de former préalablement les faces latérales des tôles destinées à être raboutées, par exemple par martelage avant soudage.

Cette opération permet d'obtenir un renflement vertical de métal sur les bords des faces latérales afin de fournir de la matière supplémentaire au niveau des jeux pendant le soudage.

Dans les deux cas, les problèmes liés à la présence de jeux entre les tôles sont résolus, mais les soudures produites présentent souvent des bourrelets au niveau de la face supérieure et également de la face inférieure.

Ces bourrelets endommagent le poinçon et la matrice lors d'un l'emboutissage ultérieur de la pièce soudée et cela est d'autant plus significatif que la zone affectée thermiquement possède, surtout en surface, une dureté au moins deux fois supérieures à la dureté du métal de base.

De plus, ces procédés connus sont difficilement transposables au soudage de tôles de différentes épaisseurs.

On connaît dans le brevet EP-A-0 531 139 qui représente l'état de la technique le plus proche selon l'Article 54(3) de la CBE, un procédé de soudage bord à bord de deux tôles de différentes épaisseurs au moyen d'un faisceau laser.

Dans ce procédé, le faisceau laser est décalé dans la tôle la plus épaisse et ce faisceau laser est perpendiculaire au plan de joint des tôles. Pour assurer la continuité de la zone soudée, le faisceau laser serpente alternativement de la tôle épaisse dans la tôle la moins épaisse.

On connaît également dans les brevets JP-A-62-144 888 et EP-A-0 279 866 des procédés de soudage bord à bord de tôles de différentes épaisseurs dans lesquels le faisceau laser est dirigé dans le plan de joint des tôles. Ce faisceau laser est éventuellement orienté à 45° en direction de la tôle la plus épaisse.

La présente invention a pour but de proposer un procédé de soudage bord à bord de tôles de différentes épaisseurs au moyen d'un faisceau laser permettant de s'affranchir des inconvénients mentionnés ci-dessus.

La présente invention a pour objet un procédé de soudage bord à bord d'au moins deux tôles de différentes épaisseurs, au moyen d'un faisceau laser, procédé dans lequel :
- on amène les tôles en contact au niveau de leurs faces latérales à rabouter,
- on dirige le faisceau laser en direction de la tôle la plus épaisse pour que l'axe vertical passant par le point focal du faisceau laser sur ladite tôle soit à une distance déterminée du plan de joint des tôles, l'axe Y-Y du faisceau laser étant incliné par rapport à la verticale d'un angle déterminé et orienté vers la tôle la plus épaisse,
- et on réalise un joint soudé au niveau des faces latérales raboutées par fusion locale desdites tôles au moyen du faisceau laser.

Selon d'autres caractéristiques de l'invention :
- la distance de l'axe vertical passant par le point focal du faisceau laser par rapport au plan de joint des tôles est compris ente 0,2 et 0,3 fois la différence de hauteur entre les faces principales desdites tôles, au niveau du plan de joint du côté du faisceau laser,
- l'axe du faisceau laser forme avec l'axe vertical passant par le point focal dudit faisceau laser, un angle, exprimé en degrés, compris entre 6 (Δe - 0,2) et 6 Δe + 3, Δe étant la différence d'épaisseur entre les deux tôles, exprimée en millimètres,
- l'axe du faisceau laser forme avec l'axe vertical passant par le point focal dudit faisceau laser, un angle compris entre 2 et 15°,
- le point focal du faisceau laser est situé sensiblement à un tiers de l'épaisseur de la tôle la plus épaisse au-dessous de la face de ladite tôle sur laquelle est dirigé le faisceau laser.

Les caractéristiques et avantages de l'invention apparaîtront au cours de la description qui va suivre, donnée uniquement à titre d'exemple, faite en référence aux dessins annexés, dans lesquels :
- la Fig. 1 est une vue schématique en lévation de deux tôles de différentes épaisseurs, pendant le soudage par le procédé selon la présente invention, dans le cas où deux faces principales de ces tôles sont situées dans un même plan.
- la Fig. 2 est une vue schématique en coupe transversale des deux tôles, après soudage par le procédé selon la présente invention.
- la Fig. 3 est une vue schématique en élévation de deux tôles de différentes épaisseurs, pendant le soudage par le procéde selon la présente invention, dans le cas où les faces principales de ces tôles ne sont pas situées dans un même plan.

Le procédé selon la présente invention consiste à souder bord à bord deux tôles d'épaisseurs différentes, au moyen d'un faisceau laser 3, une tôle 1 d'épaisseur e₁ et une tôle 2 d'épaisseur e₂ inférieure à e_{1.}

Le procédé selon la présente invention consiste :
- à amener les tôles 1 et 2 en contact au niveau de leurs faces latérales 4 et 5 à rabouter, c'est à dire au niveau de leurs bords 4 et 5 à rabouter.
- à diriger le faisceau laser 3 en direction de la face supérieure la de la tôle la plus épaisse 1 pour que l'axe vertical X-X perpendiculaire à la face supérieure la de ladite tôle 1 et passant par le point focal P du faisceau laser 3, soit à une distance déterminée d du plan de joint 7 desdites tôles 1 et 2,
- et à réaliser un joint soudé au niveau du plan de joint 7 par fusion locale des tôles 1 et 2 au moyen du faisceau laser 3, soit en déplaçant ledit faisceau laser par rapport auxdites tôles, soit en déplaçant ces tôles au-dessous du faisceau laser 3.

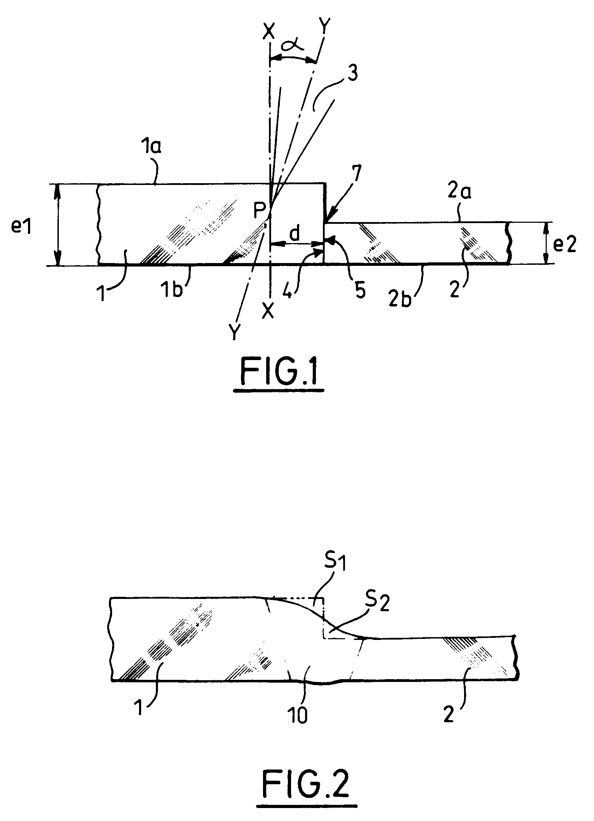

Sur les figures 1 et 2, la face principale 1b de la tôle 1 opposée à la face principale 1a sur laquelle est dirigé le faisceau laser 3 est située dans le même plan que l'une 2b des faces principales 2a et 2b de la tôle 2.

Dans ce cas, la distance d de l'axe vertical X-X passant par le point focal P du faisceau laser 3 par rapport au plan de joint 7 des tôles 1 et 2 est comprise ente 0,2 et 0,3 fois la différence d'épaisseur (e₁ - e₂) entre lesdites tôles 1 et 2.

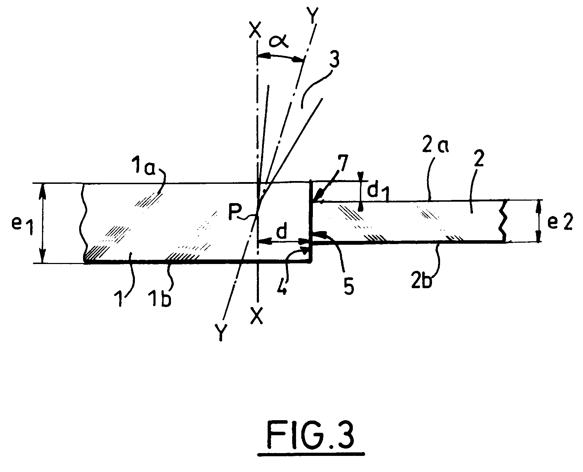

Les tôles 1 et 2 peuvent être décalées l'une par rapport à l'autre comme représenté sur la Fig. 3.

Dans ce cas, la distance de l'axe vertical X-X passant par le point focal P du faisceau laser 3 par rapport au plan de joint 7 des tôles 1 et 2 est comprise entre 0,2 et 0,3 fois la différence de hauteur d₁ entre les faces principales 1a et 2a des tôles 1 et 2, au niveau du plan de joint 7 du côté du faisceau laser 3.

Afin de réaliser un joint soudé correct, le point focal P du faisceau laser 3 est situé sensiblement à un tiers de l'épaisseur e₁ de la tôle 1 la plus épaisse au-dessous de la face la de ladite tôle sur laquelle est dirigé le faisceau laser 3.

Comme représenté sur la Fig. 2, en décalant le faisceau laser 3 dans la tôle 1 la plus épaisse par rapport au plan de joint 7, le métal situé dans la surface S₁ de la tôle 1 est fondu et s'écoule de façon à former la surface S₂ sur la tôle 2.

La surface S₂ correspond au métal qui s'est écoulé de la surface S₁ dans les espaces éventuels présents au niveau du plan de joint et sur la surface de la tôle 2.

Ainsi, on obtient une zone soudée 10 qui présente une continuité presque parfaite entre les deux épaisseurs e₁ et e₂ des tôles 1 et 2 lorsque la distance d est comprise entre 0,2 et 0,3 fois la différence d'épaisseur entre lesdites tôles 1 et 2 ou la différence de hauteur entre les faces principales des tôles 1 et 2 du côté du faisceau laser 3.

Dans ce cas, on se place dans le cas optimum du raccord, la ligne du raccord étant tangente aux surfaces des tôles 1 et 2.

Lors du soudage, l'axe Y-Y du faisceau laser 3 peut être perpendiculaire à la face principale 1a de la tôle 1 la plus épaisse sur laquelle il est dirigé ce qui est le plus souvent le cas pour le soudage de tôles de différentes épaisseurs.

Toutefois, particulièrement dans le cas de soudage de tôles 1 et 2 dont la différence d'épaisseur (e₁ - e₂) est supérieure à 1mm, on améliore sensiblement la forme du joint soudé entre les deux tôles 1 et 2 en inclinant le faisceau laser 3 par rapport à la verticale d'un angle α déterminé et orienté vers la tôle 1 la plus épaisse. Dans ce cas, l'axe Y-Y du faisceau laser forme avec l'axe vertical X-X passant par le point focal P dudit faisceau laser 3, d'un angle α compris entre 2 et 15°.

De préférence, l'axe Y-Y est incliné par rapport à l'axe X-X d'un angle α, exprimé en degrés, compris entre 6 (Δe - 0,2) et 6 Δe + 3, Δe étant la différence d'épaisseur des deux tôles 1 et 2 exprimée en millimètres.

Cette condition d'inclinaison de l'axe Y-Y du faisceau laser 3 est importante pour obtenir un profil de raccordement du joint soudé parfait.

En effet, si l'axe Y-Y du faisceau laser 3 est incliné d'un angle α supérieur à 6 Δe + 3, le joint soudé présente des porosités inacceptables, car préjudiciables à sa tenue mécanique.

Le procédé selon la présente invention permet de souder bord à bord au moins deux tôles de différentes épaisseurs en optimisant le profil de raccordement du joint soudé, c'est à dire en produisant un joint soudé ne possédant, ni bourrelets, ni creux.

Les joints soudés ainsi obtenus présentent une tenue mécanique, essentiellement en fatigue et en traction, car les discontinuités sont supprimées.

En effet la ligne du raccord entre les deux tôles présente une continuité parfaite, ladite ligne étant tangente aux surfaces des tôles, donc sans points anguleux, amorces de rupture.

De plus, l'état de surface obtenu est tout à fait compatible avec une opération d'emboutissage ultérieur.

Dans la description et les revendications, l'axe vertical X-X passant par le point focal du faisceau laser a été défini en supposant que les tôles sont disposées horizontalement.

D'une manière générale, cet axe X-X est perpendiculaire à la face principale de la tôle sur laquelle est dirigé le faisceau laser.

## Revendications

1. Procédé de soudage bord à bord d'au moins deux tôles (1, 2) de différentes épaisseurs, au moyen d'un faisceau laser (3), procédé dans lequel :
- on amène les tôles (1, 2) en contact au niveau de leurs faces latérales (4, 5) à rabouter,
- on dirige le faisceau laser (3) en direction de la tôle (1) la plus épaisse pour que l'axe vertical X-X passant par le point focal P du faisceau laser (3) sur ladite tôle (1) soit à une distance déterminée d du plan de joint 7 des tôles (1, 2), l'axe Y-Y du faisceau laser (3) étant incliné par rapport à la verticale d'un angle α déterminé et orienté vers la tôle (1) la plus épaisse,
- et on réalise un joint soudé au niveau des faces latérales (4, 5) raboutées par fusion locale desdites tôles au moyen du faisceau laser (3).

2. Procédé de soudage selon la revendication 1, caractérisé en ce que la distance d est comprise entre 0,2 et 0,3 fois la différence de hauteur entre les faces principales (1a, 2a) desdites tôles (1, 2) au niveau du plan de joint du côté du faisceau laser (3).

3. Procédé de soudage selon la revendication 1, caractérisé en ce que l'axe Y-Y du faisceau laser (3) forme avec l'axe vertical X-X passant par le point focal P dudit faisceau laser (3), un angle α exprimé en degrés, compris entre 6(Δe - 02)et 6Δe + 3, Δe étant la différence d'épaisseur entre les deux tôles (1, 2) exprimée en mm.

4. Procédé de soudage selon la revendication 1, caractérisé en ce que l'axe Y-Y du faisceau laser 3 forme avec l'axe vertical X-X passant par le point focal P dudit faisceau laser (3), un angle compris entre 2 et 15°.

5. Procédé de soudage selon l'une quelconque des revendications précédentes, caractérisé en ce que le point focal P du faisceau laser (3) est situé sensiblement à un tiers de l'épaisseur de la tôle (1) la plus épaisse au-dessous de la face de ladite tôle (1) sur laquelle est dirigé le faisceau laser (3).

## Claims

1. Process for the edge to edge welding of at least two sheets (1, 2) of different thicknesses by means of a laser beam (3), wherein:
- the sheets (1, 2) are brought into contact at their lateral faces (4, 5) to be joined end to end,
- the laser beam (3) is directed towards the thickest sheet (1), so that the vertical axis X-X passing through the focal point P of the laser beam (3) on said sheet (1) is at a given distance d from the mating surfaces (7) of the sheets (1, 2), the axis Y-Y of the laser beam (3) being inclined relative to the vertical by a given angle α and oriented towards the thickest sheet (1),
- a welded joint is made at the lateral faces (4, 5) joined end to end by the local melting of said sheets using a laser beam (3).

2. Welding process according to claim 1, characterized in that the distance d is between 0.2 and 0.3 times the height difference between the main faces (1a, 2a) of said sheets (1, 2) at the mating surfaces on the side of the laser beam (3).

3. Welding process according to claim 1, characterized in that the axis Y-Y of the laser beam (3) forms with the vertical axis X-X passing through the focal point P of said laser beam (3), an angle α, expressed in degrees, between 6 ( Δe - 0.2) and 6 Δe + 3, Δe being the thickness difference between the two sheets (1, 2), expressed in mm.

4. Welding process according to claim 1, characterized in that the axis Y-Y of the laser beam (3) forms with the vertical axis X-X passing through the focal point P of said laser beam (3), an angle between 2 and 15°.

5. Welding process according to any one of the preceding claims, characterized in that the focal point P of the laser beam (3) is located substantially at one third of the thickness of the thickest sheet (1) below the face of said sheet (1) onto which is directed the laser beam (3).

## Patentansprüche

1. Verfahren zum Stumpfnahtschweißen wenigstens zweier Bleche (1, 2) unterschiedlicher Dicken mittels eines Laserstrahls (3), wobei in dem Verfahren:
- die Bleche (1, 2) auf Höhe ihrer aneinanderzufügenden Seitenflächen (4, 5) in Kontakt gebracht werden,
- der Laserstrahl (3) in Richtung des dicksten Blechs (1) geführt wird, damit die vertikale Achse X-X, die durch den Brennpunkt P des Laserstrahls (3) im Blech (1) verläuft, einen bestimmten Abstand d von der Verbindungsebene 7 der Bleche (1, 2) besitzt, wobei die Achse Y-Y des Laserstrahls (3) in bezug auf die Senkrechte um einen bestimmten Winkel α geneigt ist und zum dicksten Blech (1) orientiert ist,
- eine Schweißverbindung auf Höhe der aneinandergefügten Seitenflächen (4, 5) durch lokales Schmelzen der Bleche mittels des Laserstrahls (3) verwirklicht wird.

2. Schweißverfahren nach Anspruch 1, dadurch gekennzeichnet, daß der Abstand d im Bereich der 0,2- bis 0,3fachen Höhendifferenz zwischen den Hauptflächen (1a, 2a) der Bleche (1, 2) auf Höhe der Verbindungsebene auf seiten des Laserstrahls (3) liegt.

3. Schweißverfahren nach Anspruch 1, dadurch gekennzeichnet, daß die Achse Y-Y des Laserstrahls (3) mit der vertikalen Achse X-X, die durch den Brennpunkt P des Laserstrahls (3) verläuft, einen Winkel α bildet, der, ausgedrückt in Grad, im Bereich von 6(Δe - 0,2) und 6Δe + 3 liegt, wobei Δe die Dickendifferenz zwischen den Blechen (1, 2), ausgedrückt in mm, ist.

4. Schweißverfahren nach Anspruch 1, dadurch gekennzeichnet, daß die Achse Y-Y des Laserstrahls 3 mit der vertikalen Achse X-X, die durch den Brennpunkt P des Laserstrahls (3) verläuft, einen Winkel bildet, der im Bereich zwischen 2° und 15° liegt.

5. Schweißverfahren nach irgendeinem der vorangehenden Ansprüche, dadurch gekennzeichnet, daß sich der Brennpunkt P des Laserstrahls (3) im wesentlichen bei einem Drittel der Dicke des dicksten Blechs (1) unterhalb der Fläche des Blechs (1), auf der der Laserstrahl (3) geführt wird, befindet.
